Europäisches Patentamt

European Patent Office

Office européen des brevets

(11) Veröffentlichungsnummer: **0 137 427**
**B1**

(12) **EUROPÄISCHE PATENTSCHRIFT**

(45) Veröffentlichungstag der Patentschrift: **16.05.90**

(51) Int. Cl.⁵: **C 03 C 25/02**

(21) Anmeldenummer: **84111600.7**

(22) Anmeldetag: **28.09.84**

(54) Schlichtemittel für Glasfasern.

(30) Priorität: **11.10.83 DE 3336845**

(43) Veröffentlichungstag der Anmeldung:
**17.04.85 Patentblatt 85/16**

(45) Bekanntmachung des Hinweises auf die
Patenterteilung:
**16.05.90 Patentblatt 90/20**

(84) Benannte Vertragsstaaten:
**BE CH DE FR GB IT LI NL**

(56) Entgegenhaltungen:
**DE-A-1 494 891**

**CHEMICAL ABSTRACTS, Band 98, Nr. 26, Juni
1983, Seite 307, Nr. 220697w, Columbus, Ohio,
US; & JP - A - 57 209 856 (UNITIKA LTD.)
23.12.1982**

**CHEMICAL ABSTRACTS, Band 98, Nr. 10, 7.
März 1983, Seite 38, Nr. 73309r, Columbus,
Ohio, US; & RO - A - 66 854 (NICOLA, GRIGORE)
30.11.1979**

(73) Patentinhaber: **BAYER AG
D-5090 Leverkusen 1 Bayerwerk (DE)**

(72) Erfinder: **Tiburtius, Christoph, Dr.
Auf dem Klemberg 41
D-5000 Köln 50 (DE)**
Erfinder: **Marx, Anna, Dr.
Dohlenweg 46
D-5000 Köln 30 (DE)**
Erfinder: **Buschhaus, Hans-Ulrich, Dr.
Morgengraben 2
D-5000 Köln 80 (DE)**
Erfinder: **Findeisen, Kurt, Dr.
In der Follmühle 10
D-5068 Odenthal (DE)**

Courier Press, Leamington Spa, England.

# EP 0 137 427 B1

**Beschreibung**

Die vorliegende Erfindung betrifft wäßrige Schlichtemittel für Glasfasern, die neben üblichen Bestandteilen zusätzlich in Wasser dispergierbare oder lösliche niedermolekulare blockierte (verkappte) Polyisocyanate enthalten, die nach einer Wärmebehandlung als Vernetzer wirken. Die Erfindung betrifft ferner damit beschlichtete Glasfasern sowie Gasfaserverbundswerkstoffe.

Es ist bekannt, organische Polymere mit Glasfasern in Form von geschnittenen Strängen, Rovings oder Geweben zu verstärken. Breite Anwendung finden hier Fasern aus E- und A-Glas. Auch Spezialtypen wie C-, D-, R- und S-Gläser werden verwertet. Als Kunststoff-Komponenten von Verbundssystemen eignen sich alle organischen Polymere, aus denen Formkörper hergestellt werden können wie z.B. die bekannten Duromere, Thermoplaste und Elastomere.

Um eine gute Verstärkungswirkung in der Kunststoff-Matrix zu erreichen, werden die Glasfasern beschlichtet, bevorzugt bei ihrer Formgebung während des Faserziehprozesses und zwar mit einer mit dem zu verstärkenden Polymer kompatiblen und die Haftungseigenschaften der Glasfasern verbessernden Schlichte. Dabei werden die Eigenschaften glasfaserverstärkter Kunststoffe wesentlich durch das Leistungsvermögen der Grenzschicht Faser/Matrix beeinflußt.

Neben der grundsätzlichen Aufgabe der Schlichte: Schaffung eines Verbundes zwischen Faser und Matrix, hat das Schlichtemittel zum Ziel, die Herstell- und Verarbeitbarkeit der Glasfasern in allen Stufen der Praxis sicherzustellen. Zu erwähnen sind hier die Anforderungen z.B. hinsichtlich Cakeablauf, Aufladung, Schutz gegenüber Reibung und Glasbruch sowie die für die Konfektionierung wichtigen Größen wie Gebundenheit, Härte und Steifigkeit des Faserstranges.

Die Schlichte ist im allgemeinen eine wäßrige Lösung oder Dispersion und besteht in der Regel mengenmäßig überwiegend aus einem oder mehreren Filmbildnern sowie einem oder mehreren Haftvermittlern und gegebenenfalls weiteren Zusätzen wie z.B. Gleitmittel, Netzmittel oder antistatisch wirkenden Substanzen. (Siehe K. L. Loewenstein: The Manufacturing Technology of Continuous Glass Fibers, Elsevier Scientific Publishing Corp. Amsterdam, London, New York, 1973).

Beispiele für filmbildende Polymere sind Polyesterpolymere, Polyurethane, Acrylpolymere, Vinylpolymere, Mischungen solcher Polymere und Copolymere und entsprechenden Monomeren, wobei im Schlichtmittel Anteile von 1 bis 15 Gew.-% einer einzigen Verbindung oder eines Gemisches aus zwei oder mehr Verbindungen vorliegen.

Als Haftvermittler werden z.B. die bekannten Silan-Haftvermittler alleine oder in Kombination untereinander eingesetzt und zwar von 0,1 bis 1,5 Gew.-% im Schlichtemittel.

Die zur Herstellung der geschlichteten Glasfasern verwendeten Schlichtemittel enthalten im allgemeinen etwa 95 bis 80% Wasser und werden auf bekannte Weise, d.h. mit Hilfe geeigneter Vorrichtungen, wie z.B. Sprüh- oder Walzensystemen, auf die mit hoher Geschwindigkeit aus Spinndüsen gezogenen Glasfilamente sofort nach ihrem Erstarren aufgetragen. Die beschlichteten, feuchten Glasfasern werden bie Temperaturen von 90—150°C getrocknet. Unter Trocknung ist dabei nicht allein die Entfernung von Wasser und anderen flüchtigen Bestandteilen zu verstehen, sondern z.B. auch das Festwerden der Schlichtebestandteile. Erst nach beendeter Trocknung hat sich die Schlichte in die fertige Überzugsmasse verwandelt.

Allgemein verbreitet ist die Vorstellung, daß der auf den Fasern verankerte Haftvermitter in direktem Kontakt zur verstärkten Polymermatrix steht. Dieses Modell gibt aber nur einen von mehreren Aspekten wider und läßt z.B. außer acht, daß mengenmäßig der oder die Filmbildner bei weitem überwiegen und die Fasern—einschließlich Haftvermittler—zum größten Teil ummanteln. Die Effektivität der Anbindung Faser/Matrix über die Haftvermittlerkomponente wird durch diese "Sperrschicht" herabgesetzt.

Es hängt nun vom jeweiligen Schlichtesystem als auch von der Polymermatrix ab. inwieweit bei der Glasfasereinarbeitung durch thermischen Abbau, physikalisches Lösen in die Matrix oder chemische Reaktionen diese "Sperrschicht" abgebaut wird. Für eine optimale Nutzung ist es zusätzlich wünschenswert, daß die Gesamtschlichte und nicht nur der Haftvermittler an der Verankerung der Fasern an die Polymermatrix beteiligt ist.

Der Erfindung liegt daher die Aufgabe zugrunde, Glasfaserschlichten bereitzustellen, die in besonderem Maße geeignet ist, die Herstellung- und Verarbeitbarkeit der Fasern im gewünschten Sinne zu beeinflussen, die Verbundeigenschaften einer geformten Harzmatrix zu verbessern, in die zum Zweck des Verstärkens Glasfasern eingelagert sind, und insbesondere eine Verbesserung der Verstärkungswirkung von Glasfasern bei Formteilen aus Polyamiden zu ermöglichen.

Durch die vorliegende Erfindung wird non ein Weg zu neuen Schlittemitteln gewiesen, die dadurch gekennzeichnet sind, daß wasserdispergierbare oder -lösliche Vernetzer auf Basis niedermolekularer verkappter Polyisocyanate Verwendung finden, wobei als Polyisocyanate Tris(isocyanatohexyl)-biuret, gegebenenfalls im Gemisch mit seinen höheren Homologen, Umsetzungsprodukte von 1-Isocyanato-3,3,5 trimethyl-5-isocyanatomethylcyclohecan mit unterschüssigen Mengen an niedermolekularen Polyolen, durch Isocyanuratbildung gewonnene Trimerisate von 1-Isocyanato-3,3,5-trimethyl-5-isocyanatomethylcyclohexan und/oder durch Uretdionbildung gewonnene Dimere von Isocyanto-3,3,5-trimethyl-5-isocyanatomethylcyclohexan eingesetzt werden.

Diese Substanzen werden erfindungsgemäß dem an sich bekannten und vorstehend beschriebenen Schlichtetyp in Anteilen von 0,1 bis 5,0 Gew.% im Schlichtemittel zugesetzt. Bevorzugte Mengenverhältnisse liegen bei 0,5 bis 3,0 Gew.-% im Schlichtemittel.

2

Als Haftvermittler eignen sich für das erfindungsgemäße System insbesondere Aminosilane wie sie z.B. in K. L. Loewenstein l.c. beschrieben sind.

Dabei ist als Haftvermittler gamma-Aminopropyltriethoxysilan besonders bevorzugt, da dieser schon bei niedrigen, kostengünstigen Konzentrationen bereits eine brauchbare Anbindung der Glasfasern an eine Vielzahl von Kunststoffen ergibt. Weitere Beispiele für Haftvermittler sind N-beta(Aminoethyl)-gamma-Aminopropyl-trimethoxysilan, gamma-Ureidopropyltriethoxysilan, beta-(3,4-Epoxycyclohexyl)-ethyltrimethoxysilan, gamma-Glycidoxypropyl-trimethoxysilan, gamma-Methacryloxypropyltrimethoxysilan oder Vinyltrimethoxysilan.

Die erfindungsgemäß verwendeten wasserdispergierbaren oder -löslichen blockierten Polyisocyanate sind an sich bekannt (vgl. DE—OS 2 456 469 und DE—OS 2 853 937). Sie werden in an sich bekannter Weise hergestellt durch Umsetzung eines in Wasser nicht löslichen und nicht dispergierbaren organischen Polyisocyanates, dessen Isocyanatgruppen zu 50 bis 99,8%, bevorzugt 75—90%, in mit einem Blockierungsmittel, für Isocyanatgruppen blockierter Form vorliegen, mit einer Verbindung welche mindestens eine gegenüber Isocyanatgruppen reaktionsfähige Gruppe und mindestens eine die Dispergierbarkeit oder Löslichkeit des Reaktionsproduktes in Wasser bewirkende hydrophile Gruppe aufweist.

Man kann sie aber auch in an sich bekannter Weise herstellen durch Umsetzung von Blockierungsmitteln für Isocyanatgruppen mit organischen Polyisocyanaten, deren Isocyanatgruppen zu 0,2 bis 50%, bevorzugt 10 bis 25%, mit einer Verbindung umgesetzt sind, welche mindestens eine gegenüber Isocyanatgruppen reaktionsfähige Gruppe und mindestens eine die Dispergierbarkeit oder Löslichkeit des Reaktionsproduktes in Wasser bewirkende hydrophile Gruppe enthält.

Die genannten Polyisocyanate werden bei der erfindungsgemäßen Verwendung in mit Blockierungsmitteln blockierter Form eingesetzt. Geeignete Blockierungsmittel sind insbesondere Verbindungen mit vorzugsweise einer gegenüber Isocyanatgruppen reaktionsfähigen Gruppe, die mit organischen Isocyanaten bei über 50°C, vorzugsweise zwischen 60 und 100°C, eine Additionsreaktion eingehen und deren so erhaltene Additionsprodukte bei Temperaturen zwischen 100 und 250°C, vorzugsweise zwischen 140 und 200°C, unter Freisetzung des Blokkierungsmittels in die Ausgangskomponente gespalten werden. Geeignete derartige Blockierungsmittel sind z.B. Verbindungen wie sie als Blockierungsmittel in den DE—OS 2 456 469 und DE—OS 2 853 937 Verwendung finden; es können aber auch primäre Alkohole wie Methanol, Ethanol, Butanol, Hexanol oder 2-Ethylhexan-1-ol eingesetzt werden. Vorzugsweise werden bei der erfindungsgemäßen Verwendung ε-Caprolactam, Methylethylketonoxim und Phenol verwendet.

Es ist erfindungsgemäß auch möglich, die Polyisocyanate hydrophil zu modifizieren. Die zur hydrophilen Modifizierung der genannten Polyisocyanate verwendeten Verbindungen können sowohl ionisch als auch nichtionisch aufgebaut sein;

man kann aber auch zur Hydrophilierung beliebige Gemische ionischer und nichtionischer Verbindungen verwenden.

Für die erfindungsgemäß Verwendung geeignete Verbindungen mit mindestens einem gegenüber Isocyanatgruppen reaktionsfähigen Wasserstoffatom und mindestens einer hydrophilen Gruppierung sind beispielsweise Polyaminosulfonsäuren und/oder Monohydroxypolyalkylenoxide des Molekulargewichtsbereichs 500—5000.

Aus der JP—A—57 209 856, die in Chem. Abstr., Bd. 98, Nr. 26, Juni 1983, Nr. 220 697w referiert ist, sind Schlichtemittel für Glasfasern bekannt, die eine Polyurethanemulsion als Filmbildner, einen Silan-Haftvermittler und verkappte Polyisocyanate enthalten. In dieser Schrift sind jedoch keine Zusammensetzungen angegeben, die entweder wasserlösliche oder ohne Dispergiermittel wasserdispergierbare verkappte Polycyanate enthalten.

Die Vorzüge der erfindungsgemäßen Schlichtemittel und geschlichteten Glasfasern erklären sich aus der besonderen Natur der zugesetzten geblockten Polyisocyanate.

Aufgrund der Möglichkeiten, die Rückspalttemperatur zum Isocyanat über einen großen Bereich zu steuern, bestehen hier grundsätzlich 2 Wege zur Nutzung. Will man primär die unmittelbaren Eigenschaften der geschlichteten, fertigen Glasfasern wie z.B. die Naßfestigkeit, Chemikalienbeständigkeit, das Tränkungsverhalten oder die Gebundenheit und Steifigkeit beeinflussen, wählt man zweckmäßigerweise Rückspalttemperaturen, die im Bereich der Glasfasertrockung liegen (90—150°C). Vernetzende Reaktionen treten dann ausschließlich zwischen den Schlichtekomponenten auf.

Ein weiterer wesentlicher Vorteil bei Verwendung der genannten Polyisocyanate im Schlichtemittel besteht in der Möglichkeit, die Rückspalttemperatur zum Isocyanat in den Bereich oberhalb 150°C zu legen, wodurch die verkappten Polyisocyanate als solche nach der Glasfasertrocknung auf den Fasern erhalten bleiben und als potentielle Vernetzer weiterhin zu Verfügung stehen. Werden die geschlichteten Glasfasern nun mit einer Polymermatrix zu einem Verbundwerkstoff geformt, bei dessen Herstellung und Verarbeitung durch Wärmezufuhr die Rückspalttemperatur der verkappten Polyisocyanate überschritten wird, so werden an der unmittelbaren Grenzschpcht Glasfaser/Matrix reaktive Gruppen freigesetzt, die wirkungsvoll die Anbindung der Fasern an das zu verstärkende Polymer unterstützen.

Die Erfindung und vorteilhafte Einzelheiten derselben werden anhand der nachfolgenden Ausführungsbeispiele näher erläutert. Die angegebenen Beispiele richten sich auf besonders bevorzugte Ausführungsformen der Erfindung.

Die Angaben über Teile und Prozentsätze sind Gewichtsangaben, bezogen auf Feststoff, falls nichts anderes festgestellt wird.

**EP 0 137 427 B1**

Beispiel 1
a) Zusammensetzung des erfindungsgemäßen Schlichtemittels

| | |
|---|---|
| Polyurethan-Filmbildner | 5,0 Gew.-% |
| γ-aminopropyltriethoxysilan | 0,5 Gew.-% |
| Polyisocyanat-Dispersion A | 1,2 Gew.-% |
| Gleitmittel | 0,56 Gew.-% |
| Wasser | ad 100 |

b) Herstellung der Polyisocayanat-Dispersion A

11,08 kg eines auf Butanol gestarteten Ethylenoxid-Polyethers, Molekulargewicht 2000, (5,54 OH-Äquiv.) werden bei 90°C aufgeschmolzen, mit

15,18 kg eines Hexamethylendiisocyanat-Biurets (83,06 NCO-Äquiv.) (NCO-Gehalt: 22,98%) versetzt und 3 h bei 90°C gerührt. (NCO-Gehalt ber.: 12,40%; 12,31%). Es werden innerhalb 1h

6,74 kg Methylethylketonoxim (77,47 OH-Äquiv.) so zugegeben, daß unter mäßigem Kühlen 90°C gehalten werden. Nach der Zugabe wird 1 h bei 90°C nachgerührt, auf 60°C gekühlt und mit

77,00 kg Wasser erzetzt.

Man erhält eine niedrigviskose, milchige Dispersion.

| | |
|---|---|
| Feststoffgehalt: | 30,0 % |
| block. NCO: | 2,96% (bez. auf Lsg.) |
| η20°C: | 37 cP |

c) Herstellung des Schlichtemittels

In einem Mischbehälter wird der größte Teil des erforderlichen Wassers vorgelegt und unter Rühren der Haftvermittler zugefügt. Unter ständigem Weiterrühren werden nacheinander der Filmbildner, Gleitmittel sowie die Polyisocyanat-Dispersion zugegeben. Der pH-Wert der Schlichte wird nach Zusatz des restlichen Wassers mit Essigsäure auf etwa 5,5 eingestellt.

d) Prüfung der Verstärkungswirkung von erfindungsgemäß beschlichteten Glasfasern

Die derart geschlichteten und für 9 h bei 130°C getrockneten Glasfasern (E-Glas) werden in Form von auf 6 mm Länge geschnittenen Strängen, die aus je 800 Einzelfäden mit einem Durchmesser von 11 µm bestehen, in einem Doppelwellenextruder in Polyamid 6 (Durethan® B 31 F, Bayer AG) eingearbeitet, wobei der Glasgehalt im glasfaserverstärkten Polyamid 30% beträgt. Aus diesem Material werden auf einer Spritzgußmaschine Prüfkörper hergestellt, deren mechanische Eigenschaften nach den genannten Normvorschriften geprügt werden:

| | | |
|---|---|---|
| Schlagzähigkeit | DIN 5 34 53 | 70,6 kJ/m² |
| Biegefestigkeit | DIN 5 34 52 | 292 MPa |

Beispiel 2

Ein Schlichtemittel gemäß Beispiel 1 wird hergestellt mit der Abweichung, daß es nur 0,8 Gew.-% der Polyisocyanat-Dispersion A aufweist. Die Herstellung der Schlichte, der Beschlichtungsvorgang etc. sowie die Prüfung der erfindungsgemäßen Glasfasern auf ihre Verstärkungswirkung in Polyamid erfolgt auf die im Beispiel 1 angegebene Weise. Folgende mechanische Eigenschaftswerte werden gekannte:

| | | |
|---|---|---|
| Schlagzähigkeit | DIN 5 34 53 | 66,7 kJ/m² |
| Biegefestigkeit | DIN 5 34 52 | 287 MPa |

Beispiel 3

Beispiel 1 wird wiederholt mit folgenden Abänderung: Die Trocknung erfolgt in 2 Stufen, zunächst 6 h bei 130°C und anschließend 4 h bei 150°C. Als Prüfwerte erhält man:

| | | |
|---|---|---|
| Schlagzähigkeit | DIN 5 34 53 | 67,6 kJ/m² |
| Biegefestigkeit | DIN 5 34 52 | 292 MPa |

4

Beispiel 4 (Vergleich)

Durch Weglassen der in Beispiel 1 bis 3 zugesetzten Polyisocyanat-Dispersion A erhält man ein nicht erfindungsgemäßes Schlichtemittel. Analog zu Beispiel 1 und 2 werden auch mit diesem Schlichtemittel Glasfasern ausgerüstet und zur Prüfung gebracht.

| | | |
|---|---|---|
| Schlagzähigkeit | DIN 5 34 53 | 63,9 kJ/m² |
| Biegefestigkeit | DIN 5 34 52 | 279 MPa |

Beispiel 5 (Vergleich)

An Prüfkörpern aus Polyamid 6 (Durethan® B 31 F), das mit 30% handelsüblichem E-Glas in Form von geschnittenen Strängen (Länge 6 mm) verstärkt wird, werden folgende Meßwerte ermittelt:

| | | |
|---|---|---|
| Schlagzähigkeit | DIN 5 34 53 | 62,1 kJ/m² |
| Biegefestigkeit | DIN 5 34 52 | 251 MPa |

Die Ergebnisse der Beispiele 1 bis 5 belegen bereits die Überlegenheit der erfindungsgemäßen Schlichtemittel und Glasfasern. In den folgenden Beispielen 6 und 7 werden weitere erfindungsgemäße Schlichtemittel beschrieben.

Beispiel 6

Es wird nach der Arbeitsweise von Beispiel 1 vorgegangen mit der Ausnahme, daß 1,2 Gew.-% der Polyisocyanat-Dispersion B anstelle der -Dispersion A verwendet werden.

Herstellung der Polyisocyanat-Dispersion B

19,90 kg (108,88 NCO-Äquiv.) eines Hexamethylendiisocyanat-Biurets (NCO-Gehalt: 22,98%) werden bei 90°C vorgelegt und innerhalb 1h mit

10,30 kg (91,15 mol) Caprolactam versetzt und nach Zugabe 1h bei 90°C nachgerührt. (NCO-Gehalt ber.: 2,47%; gef.: 2,44%). Es wird auf 60°C gekühlt, mit einer Lösung von

1,73 kg 2-(2-Aminoethyl)aminoethansulfonsäure-Na-Salz (18,21 Äval) in

7,06 kg Wasser versetzt und 1h bei 60°C gerührt.
Die Mischung wird mit

67,44 kg Wasser verdünnt.
Man erhält eine niedrigviskose, opake Dispersion.

| | |
|---|---|
| Feststoffgehalt: | 30,0 % |
| Block. NCO: | 3,60 % (bez. auf Lsg.) |
| SO₃⁻-Gehalt: | 0,67 % (bez. auf Lsg.) |
| 20°C: | 90 cP |

Es resultieren folgende Prüfwerte:

| | | |
|---|---|---|
| Schlagzähigkeit | DIN 5 34 53 | 70,3 kJ/m² |
| Biegefestigkeit | DIN 5 34 52 | 291 MPa |

Beispiel 7

Es wird nach der Arbeitsweise von Beispiel 1 vorgegangen mit der Ausnahme, daß 1,2 Gew.-% der Polyisocyanat-Dispersion C anstelle der -Dispersion A eingesetzt werden.

Herstellung der Polyisocyanat-Dispersion C

891,4 g eines Hexamethylendiisocyanat-Biurets (5,12 NCO-Äquiv.) (NCO-Gehalt: 24,14%) werden mit

1708 g eines auf Butanol gestarteten Ethylenoxid-Polyethers, Molekulargewicht 2000 (0,85 OH-Äquiv.), 3 h bei 100°C gerührt, innerhalb 30 min mit

401,6 g (4,27 OH-Äquiv.) destilliertem Phenol versetzt und 1 h bei 90°C gerührt. Es wird mit

7000 g Wasser dispergiert.
Man erhält eine niedrigviskose, milchige Dispersion.

| | |
|---|---|
| Feststoffgehalt: | 30,0 % |
| Block NCO: | 1,79 % (bez. auf Lsg.) |

Die geschlichteten Glasfasern führen zu folgenden Verstärkungseigenschaften:

| | | |
|---|---|---|
| Schlagzähigkeit | DIN 5 34 53 | 69,5 kJ/m² |
| Biegefestigkeit | DIN 5 34 52 | 287 MPa |

Auch diese Beispiele zeigen die vorteilhaften Eigenschaften der erfindungsgemäßen Schlichtemittel und Glasfasern.

**Patentansprüche**

1. Wäßrige Schlichtemittel für Glasfasern bestehend im wesentlichen aus Haftvermittlern, Filmbidnern sowie gegebenenfalls Gleitmittel, Netzmittel und weiteren an sich bekannten Zusätzen, dadurch gekennzeichnet, daß die Schlichte zusätzlich verkapptes Tris-(isocyanatohexyl)-biuret, gegebenenfalls im Gemisch mit seinen höheren Homologen, verkappte Umsetzungsprodukte von 1-Isocyanato-3,3,5-trimethyl-5-isocyanatomethylcyclohexan mit unterschüssigen Mengen an niedermolekularen Polyolen, verkappte, durch Isocyanuratbildung gewonnene Trimerisate von 1-Isocyanato-3,3,5-trimethyl-5-isocyanatomethylcyclohexan und/oder verkappte durch Uretdionbildung gewonnene Dimere von 1-Isocyanato-3,3,5-trimethy-5-isocyanatomethylcyclohexan enthält.

2. Schlichtemittel nach Anspruch 1, dadurch gekennzeichnet, daß die Haftvermittler Silane oder Siloxane sind.

3. Schlichtemittel nach Anspruch 1 oder 2, dadurch gekennzeichnet, daß der Haftvermittler ein Aminosilan ist.

4. Schlichtemittel nach einem der Ansprüche 1 bis 3, dadurch gekennzeichnet, daß der Filmbildner ein Polyurethan ist.

5. Verfahren zum Beschlichten von Glasfasern, dadurch gekennzeichnet, daß man auf die Glasfaser eine Schlichte gemäß einem der Ansprüche 1 bis 4 aufbringt.

6. Geschlichtete Glasfasern, dadurch gekennzeichnet, daß ein Schlichtemittel gemäß einem der Ansprüche 1 bis 4 aufgebracht wurde.

7. Verwendung von geschlichteten Glasfasern nach Anspruch 6 zur Verstärkung von Kunststoffen.

8. Verbundwerkstoff enthaltend Glasfasern gemäß Anspruch 6.

9. Verbundwerkstoff gemäß Anspruch 8, dadurch gekennzeichnet, daß der Kunststoff Polyamid ist.


**Revendications**

1. Apprêt aqueux pour fibres de verre, principalement constitué d'agents d'adhésivité, d'agents filmogènes ainsi que, le cas échéant, d'un lubrifiant, d'un agent mouillant et d'autres additifs connus, caractérisé en ce qu'il contient en outre un tris-(isocyanatohexyl)biuret protégé, le cas échéant en mélange avec ses homologues supérieurs, des produits de réaction protégés du 1-isocyanato-3,3,5-triméthyl-5-isocyanatométhylcyclohexane avec des quantités déficitaires de polyols de bas poids moléculaire, des produits de trimérisation protégés, obtenus par formation d'isocyanurate, de 1-isocyanato-3,3,5-triméthyl-5-isocyanatométhylcyclohexane et/ou des dimères protégés, obtenus par formation d'uret-dione, de 1-isocyanato-3,3,5-triméthyl-5-isocyanatométhylcyclohexane.

2. Apprêt suivant la revendication 1, caractérisé en ce que les agents d'adhésivité sont des silanes ou des siloxanes.

3. Apprêt suivant la revendication 1 ou 2, caractérisé en ce que l'agent d'adhésivité est un aminosilane.

4. Apprêt suivant l'une des revendications 1 à 3, caractérisé en ce que l'agent filmogène est un polyuréthanne.

5. Procédé d'apprêtage de fibres de verre, caractérisé en ce qu'on applique sur la fibre de verre un apprêt suivant l'une des revendications 1 à 4.

6. Fibres de verre apprêtées, caractérisées en ce qu'un apprêt suivant l'une des revendications 1 à 4 a été appliqué.

7. Utilisation de fibres de verre apprêtées suivant la revendication 6 pour le renforcement de matières plastiques.

8. Matériau composite contenant des fibres de verre suivant la revendication 6.

9. Matériau composite suivant la revendication 8, caractérisé en ce que la matière plastique est un polyamide.


**Claims**

1. Aqueous sizes for glass fibres consisting essentially of coupling agents, film formers and, optionally, lubricants, wetting agents and other additives known *per se*, characterized in that the sizes additionally contain tris-(isocyanatohexyl)-biuret, optionally in admixture with its higher homologs, masked reaction products of 1-isocyanato-3,3,5-trimethyl-5-isocyanatomethyl cyclohexane with substoichiometric quantities of low molecular weight polyols, masked trimers—obtained by isocyanurate formation—of 1-isocyanato-3,3,5-trimethyl-5-isocyanatomethyl cyclohexane and/or masked dimers—obtained by uretdione formation—of 1-isocyanato-3,3,5-trimethyl-5-isocyanatomethyl cyclohexane.

2. Sizes as claimed in Claim 1, characterized in that the coupling agents are silanes or siloxanes.

3. Sizes as claimed in Claim 1 or 2, characterized in that the coupling agent is an aminosilane.

4. A size as claimed in any of Claims 1 to 3, characterized in that the film former is a polyurethane.

5. A process for sizing glass fibres, characterized in that the size claimed in any of Claims 1 to 4 is applied to the glass fibres.

6. Sized glass fibres, characterized in that the size claimed in any of Claims 1 to 4 was applied.

7. The use of the sized glass fibres claimed in Claim 6 for reinforcing plastics.

8. A composite material containing the glass fibres claimed in Claim 6.

9. A composite material as claimed in Claim 8, characterized in that the plastic is polyamide.